# FASCICULE DE BREVET EUROPEEN

(11) **EP 4 563 333 B1**
(45) Date de publication et mention de la délivrance du brevet: **12.08.2026**
(21) Numéro de dépôt: 24215611.5
(22) Date de dépôt: 26.11.2024
(51) Int. Cl.: B29C 70/42, B29D 99/00, B29C 70/44

(54) **DISPOSITIF DE FABRICATION D'UN PANNEAU RAIDI EN MATÉRIAU COMPOSITE COMPRENANT UN SYSTÈME DE MAINTIEN TEMPORAIRE DE MANDRINS SUR UNE SURFACE DE POSE**
VORRICHTUNG ZUR HERSTELLUNG EINER VERSTEIFTEN VERBUNDPLATTE AUS EINEM VERBUNDWERKSTOFF MIT EINEM SYSTEM ZUR VORÜBERGEHENDEN HALTERUNG VON DORNEN AUF EINER VERLEGEFLÄCHE
DEVICE FOR MANUFACTURING A STIFFENED PANEL MADE OF COMPOSITE MATERIAL COMPRISING A SYSTEM FOR TEMPORARILY HOLDING MANDRELS ON A MOUNTING SURFACE

(30) Priorité: 29.11.2023 FR 2313265
(43) Date de publication de la demande: 04.06.2025
(73) Titulaire: AIRBUS OPERATIONS (S.A.S.), 31060 Toulouse (FR)
(72) Inventeur: CHALLET, Marc, 17300 ROCHEFORT (FR); MERCERON, Cédric, 17300 ROCHEFORT (FR); MEIGNEN, Pierre, 31300 TOULOUSE (FR); PLOQUIN, Nicolas, 44340 BOUGUENAIS (FR); RAITIERE, Guillaume, 44340 BOUGUENAIS (FR)
(74) Mandataire: Fantin, Laurent

(56) Documents cités:
- FR-A1- 3 015 347

## Description

La présente demande se rapporte à un dispositif de fabrication d'un panneau raidi en matériau composite comprenant un système de maintien temporaire de mandrins sur une surface de pose ainsi qu'à un procédé de fabrication d'un panneau raidi utilisant ledit dispositif. FR3015347A1 décrit un dispositif de fabrication d'un panneau raidi en matériau composite selon le préambule de la revendication 1.

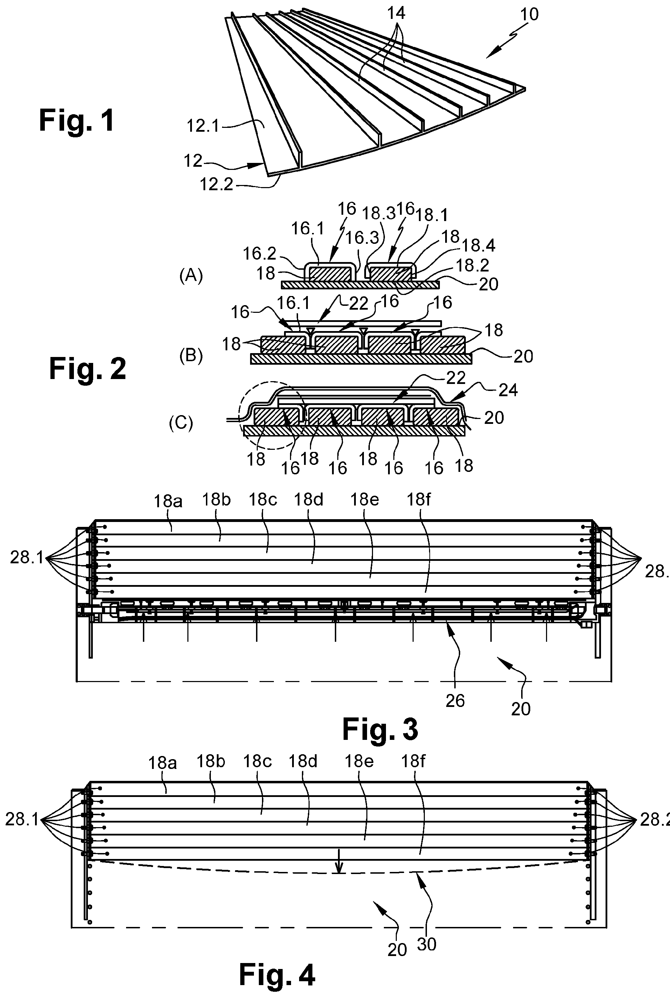

Selon un mode de réalisation visible sur la figure 1, un panneau raidi 10 comprend une paroi 12 qui présente des première et deuxième faces 12.1, 12.2 ainsi qu'une pluralité de raidisseurs 14 sensiblement parallèles entre eux, perpendiculaires à la paroi 12 et positionnés sur la première face 12.1.

Selon un mode opératoire visible sur la figure 2, un procédé de fabrication d'un panneau raidi en matériau composite comprend une étape de fabrication de profilés 16 en U ou en L en matériau composite, une étape de pose de mandrins 18 supportant chacun un profilé 16 sur une surface de pose 20 comme illustré sur la partie (A) de la figure 2, les bases 16.1 des profilés 16 étant sensiblement parallèles à la surface de pose 20 et écartées de cette dernière, une étape de pose d'une peau 22 en matériau composite sur les bases 16.1 des profilés 16 comme illustré sur la partie (B) de la figure 2, une étape de mise en place d'un outillage de polymérisation ou de consolidation 24 comme illustré sur la partie (C) de la figure 2 et une étape de polymérisation ou de consolidation.

Selon un mode de réalisation, chaque profilé en U est obtenu en drapant des plis de fibres à plat pour former une préforme plane puis en déformant la préforme plane sur un moule de manière à plier les deux ailes 16.2, 16.3 du profilé 16 en U. Le profilé pourrait être en L.

Selon une configuration, chaque mandrin 18 comprend une face supérieure 18.1 contre laquelle est positionnée la base 16.1 d'un profilé 16 en U, une face inférieure 18.2 (parallèle à la face supérieure 18.1) en contact avec la surface de pose 20 ainsi que des faces latérales droite et gauche contre lesquelles sont positionnées les ailes 16.2, 16.3 du profilé 16.

Comme illustré sur les figures 3 et 4, un dispositif de fabrication d'un panneau raidi comprend une surface de pose 20 et plusieurs mandrins 18a à 18f posés sur la surface de pose 20 et accolés les uns aux autres afin de plaquer une première aile 16.2 d'un profilé 16 d'un premier mandrin 18a contre une deuxième aile 16.3 d'un profilé 16 d'un deuxième mandrin 18b, les première et deuxième ailes 16.2, 16.3 formant, après l'étape de polymérisation ou de consolidation, un raidisseur 14 du panneau raidi 10.

Selon un mode opératoire, le premier mandrin 18a est posé sur la surface de pose 20 puis relié à chacune de ses extrémités à la surface de pose 20 en utilisant des vis 28.1, 28.2. En suivant, le deuxième mandrin 18b est posé sur la surface de pose 20 et plaqué contre le premier mandrin 18a lors d'une phase de compression en utilisant une poutre de compression 26, comme illustré sur la figure 3. En parallèle, les extrémités du deuxième mandrin 18b sont reliées à la surface de pose 20 en utilisant des vis 28.1, 28.2. En suivant, la poutre de compression 26 est retirée et le troisième mandrin 18c est posé sur la surface de pose 20 et plaqué contre le deuxième mandrin 18b en utilisant la poutre de compression 26. Ces étapes sont répétées pour tous les autres mandrins 18d, 18e, 18f de manière à obtenir un ensemble de mandrins 18a à 18f accolés les uns aux autres comme illustré sur la figure 4, les extrémités de chaque mandrin 18a à 18f étant reliées à la surface de pose 20.

A chaque retrait de la poutre de compression 26, le dernier mandrin posé et plaqué se déforme légèrement en raison du foisonnement des profilés 16 à l'état cru ou mi-cuit. L'accumulation de ces légères déformations au niveau de chaque mandrin 18b à 18f conduit à une déformation 30 (visible en pointillés sur la figure 4) relativement importante au niveau du dernier mandrin 18f avant l'étape de polymérisation ou de consolidation, ce qui conduit notamment à complexifier la mise en place de l'outillage de polymérisation ou de consolidation et à des défauts de géométrie au niveau de la pièce finie.

La présente invention vise à remédier à tout ou partie des inconvénients de l'art antérieur.

A cet effet, l'invention a pour objet un dispositif de fabrication d'un panneau raidi en matériau composite comprenant une surface de pose ainsi qu'un ensemble de mandrins impairs et pairs accolés les uns aux autres, orientés selon une direction longitudinale et montés les uns après les autres selon un sens de montage ; chaque mandrin impair ou pair présentant des première et deuxième extrémités, une surface de contact configurée pour être plaquée contre la surface de pose ainsi qu'au moins une surface de moulage configurée pour recevoir au moins un profilé en matériau composite ; le dispositif de fabrication comportant un système de compression configuré pour plaquer les mandrins impairs et pairs les uns contre les autres ainsi que des premier et deuxième éléments de fixation configurés pour relier respectivement les première et deuxième extrémités de chaque mandrin impair ou pair à la surface de pose.

Selon l'invention, le dispositif de fabrication comprend un système de maintien temporaire des mandrins impairs et pairs qui comporte au moins un logement solidaire au moins temporairement de la surface de pose ainsi que, pour chaque mandrin impair ou pair, au moins un pion d'indexage solidaire du mandrin impair ou pair et situé entre ses première et deuxième extrémités, ledit pion d'indexage présentant au moins une partie en saillie au moins temporairement par rapport à la surface de contact du mandrin impair ou pair et configurée pour se loger dans le logement.

Contrairement à l'art antérieur, après le retrait du système de compression, le mandrin impair ou pair juste plaqué ne se déforme pas car il est maintenu par le système de maintien temporaire.

Selon une autre caractéristique, chaque pion d'indexage est rétractable et configuré pour occuper un état rétracté dans lequel la partie du pion d'indexage n'est pas en saillie par rapport à la surface de contact et un état sorti dans lequel la partie du pion d'indexage est en saillie par rapport à la surface de contact.

Selon une autre caractéristique, chaque mandrin impair ou pair comprend, pour chaque pion d'indexage, un élément de rappel pour maintenir le pion d'indexage à l'état sorti.

Selon une autre caractéristique, le dispositif de fabrication comprend au moins une règle présentant au moins un logement configuré pour loger la partie en saillie d'un pion d'indexage, chaque règle étant mobile selon une direction transversale perpendiculaire à la direction longitudinale par rapport à la surface de pose et configurée pour occuper un état déverrouillé dans lequel la règle peut se translater selon la direction transversale ainsi qu'un état verrouillé dans lequel la règle est bloquée au moins dans le sens de montage.

Selon une autre caractéristique, chaque logement comprend un premier chant configuré pour coopérer avec un pion d'indexage. En complément, chaque pion d'indexage comprend une encoche configurée pour coopérer avec le premier chant d'un logement, l'encoche et le premier chant étant configurés pour maintenir le pion d'indexage à l'état sorti lorsque la règle est à l'état verrouillé.

Selon une autre caractéristique, la surface de pose comprend, pour chaque règle, une rainure orientée selon une direction parallèle à la direction transversale, adaptée pour loger la règle et lui permettre de coulisser selon la direction transversale.

Selon une autre caractéristique, la rainure et la règle ont des sections sensiblement égales de sorte que la première face de la règle affleure à la surface de pose.

Selon une autre caractéristique, le dispositif de fabrication comprend, pour chaque règle, au moins un élément de verrouillage configuré pour occuper un état monté dans lequel l'élément de verrouillage est relié à la surface de pose et maintient la règle à l'état verrouillé ainsi qu'un état démonté dans lequel l'élément de verrouillage est séparé de la surface de pose, l'état démonté correspondant à l'état déverrouillé de la règle.

Selon une autre caractéristique, à l'état monté, l'élément de verrouillage est positionné au niveau d'une extrémité de la rainure, la rainure présentant une dimension selon la direction transversale sensiblement égale à la somme des dimensions selon la direction transversale de la règle et de l'élément de verrouillage.

Selon une autre caractéristique, l'élément de verrouillage comprend un plot de verrouillage ainsi qu'un élément de fixation configuré pour relier de manière démontable le plot de verrouillage et la surface de pose, le plot de verrouillage comportant un chant de contact configuré pour prendre appui contre la règle, ledit chant de contact étant incliné de sorte que lorsque le plot de verrouillage se rapproche de la surface de pose, le plot de verrouillage pousse la règle.

Selon une autre caractéristique, le plot de verrouillage a une forme de pyramide tronquée. En complément, la rainure comprend une empreinte configurée pour recevoir le plot de verrouillage, l'empreinte présentant une forme complémentaire à celle du plot de verrouillage.

Selon une autre caractéristique, le dispositif de fabrication comprend au moins un jeu de règles comportant une première règle configurée pour coopérer avec les pions d'indexage des mandrins impairs ainsi qu'une deuxième règle configurée pour coopérer avec les pions d'indexage des mandrins pairs.

Selon une autre caractéristique, chaque jeu de règles comprend une troisième règle configurée pour coopérer avec un pion d'indexage du dernier mandrin posé sur la surface de pose.

Selon une autre caractéristique, le dispositif de fabrication comprend plusieurs jeux de règles répartis entre les première et deuxième extrémités des mandrins.

L'invention a également pour objet un procédé de fabrication d'un panneau raidi en matériau composite utilisant un dispositif de fabrication selon l'une des caractéristiques précédentes.

Ce procédé de fabrication comprend :
- une étape de pose sur la surface de pose d'un mandrin impair ou pair supportant un profilé en matériau composite cru ou mi-cuit,
- une étape de fixation des première et deuxième extrémités du mandrin impair ou pair juste posé sur la surface de pose,
- une étape de compression du mandrin impair ou pair juste posé contre un mandrin impair ou pair précédemment posé grâce à un système de compression,
- après que chaque pion d'indexage relié audit mandrin impair ou pair juste posé ait été logé dans un logement d'une règle à l'état verrouillé, une étape de retrait du système de compression,
- les étapes précédentes étant répétées jusqu'à ce que tous les mandrins impairs et pairs soient posés sur la surface de pose,
- une étape de consolidation ou de polymérisation lors de laquelle les règles sont à l'état déverrouillé.

Selon une autre caractéristique, chaque mandrin impair coopérant avec la première règle de chaque jeu de règles, chaque première règle de chaque jeu de règles est verrouillée à l'issue de l'étape de compression d'un mandrin impair avant que le système de compression ne soit retiré. En parallèle, chaque mandrin pair coopérant avec la deuxième règle de chaque jeu de règles, chaque deuxième règle de chaque jeu de règles est verrouillée à l'issue de l'étape de compression d'un mandrin pair avant que le système de compression ne soit retiré.

D'autres caractéristiques et avantages ressortiront de la description de l'invention qui va suivre, description donnée à titre d'exemple uniquement, en regard des dessins annexés parmi lesquels :
- La figure 1 est une vue en perspective d'un panneau raidi,
- La figure 2 est une représentation schématique de différentes étapes de fabrication d'un panneau raidi illustrant un mode de réalisation de l'art antérieur,
- La figure 3 est une vue de dessus d'un dispositif de fabrication d'un panneau raidi lors d'une phase de compression illustrant un mode de réalisation de l'art antérieur,
- La figure 4 est une vue de dessus du dispositif de fabrication visible sur la figure 3 avant une étape de polymérisation ou de consolidation,
- La figure 5 est une vue de dessus d'un dispositif de fabrication d'un panneau raidi illustrant un mode de réalisation de l'invention,
- La figure 6 est une vue en perspective d'une partie d'une surface de pose du dispositif de fabrication visible sur la figure 5,
- La figure 7 est une coupe transversale selon la ligne VII-VII de la figure 6 du dispositif de fabrication,
- La figure 8 est une coupe d'un mandrin d'un dispositif de fabrication équipé d'un pion d'indexage illustrant un mode de réalisation de l'invention,
- La figure 9 est une vue en perspective d'un pion de verrouillage à l'état monté illustrant un mode de réalisation,
- La figure 10 est une vue en perspective du pion de verrouillage visible sur la figure 9 à l'état démonté.

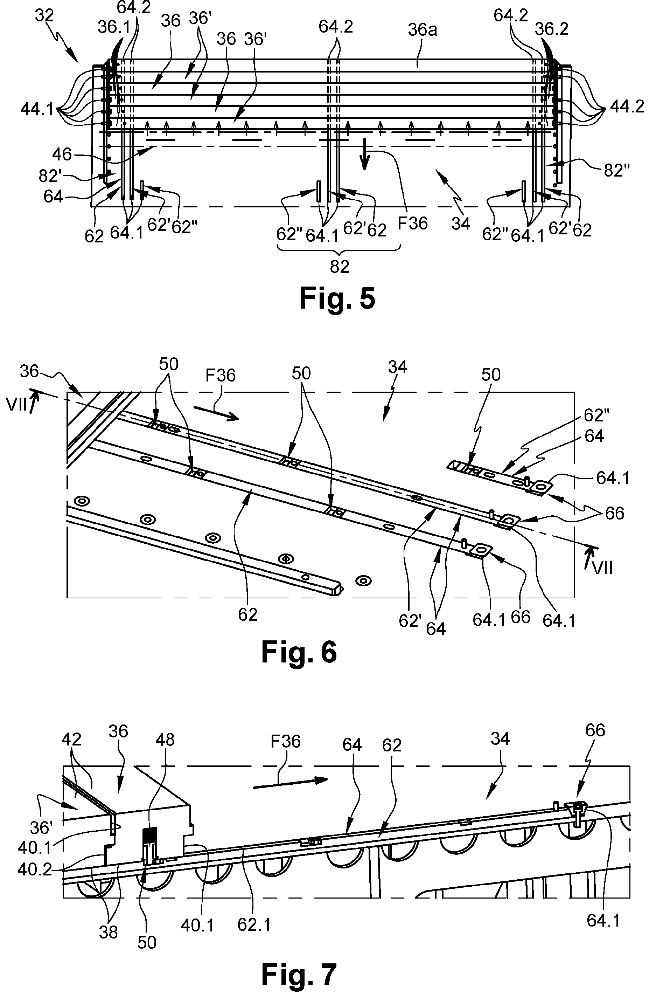

Selon un mode de réalisation visible sur les figures 5 à 8, un dispositif de fabrication 32 d'un panneau raidi comprend une surface de pose 34 ainsi que plusieurs mandrins 36, 36' configurés pour être posés sur la surface de pose 34.

Selon une configuration, la surface de pose 34 est sensiblement plane. Bien entendu, l'invention n'est pas limitée à cette configuration. Ainsi, la surface de pose 34 pourrait être courbe. A titre indicatif, la surface de pose 34 peut être la surface supérieure d'une table.

Chaque mandrin 36 est un élément longiligne, qui s'étend entre des première et deuxième extrémités 36.1, 36.2, configuré pour supporter un profilé en matériau composite cru ou mi-cuit (non totalement polymérisé).

Chaque mandrin 36, 36' comprend une surface de contact 38 configurée pour être plaquée contre la surface de pose 34. Lorsque le profilé présente une section transversale en U, chaque mandrin 36, 36' comprend, en plus de la surface de contact 38, une face supérieure 42 (opposée à la surface de contact 38) contre laquelle est positionnée la base du profilé en U ainsi que des premier et deuxième chants 40.1, 40.2 contre lesquels sont positionnées les ailes du profilé en U.

Chaque mandrin 36, 36' présente une longueur (dimension prise de la première extrémité 36.1 jusqu'à la deuxième extrémité 36.1, 36.2) ainsi qu'une largeur (dimension prise entre les premier et deuxième chants 40.1, 40.2). Les mandrins ont sensiblement tous la même longueur.

Bien entendu, l'invention n'est pas limitée à ce mode de réalisation pour les mandrins 36, 36'. Quel que soit le mode de réalisation, chaque mandrin 36, 36' comprend une surface de contact 38 configurée pour être en contact avec la surface de pose 34 ainsi qu'au moins une surface de conformage ou moulage configurée pour recevoir au moins un profilé en U ou en L. Chaque mandrin 36, 36' peut fléchir dans un plan parallèle à la surface de contact 38, entre ses première et deuxième extrémités 36.1, 36.2, en raison notamment d'un rapport longueur sur largeur important, généralement supérieur à 10. Selon un mode de réalisation, chaque mandrin 36, 36' est métallique.

Le dispositif de fabrication 32 comprend, pour chaque mandrin 36, 36' posé sur la surface de pose 34, des premier et deuxième éléments de fixation 44.1, 44.2 configurés pour relier respectivement les première et deuxième extrémités 36.1, 36.2 du mandrin 36, 36' à la surface de pose 34. Ces éléments de fixation 44.1, 44.2 ne sont pas plus décrits car ils peuvent être identiques à ceux de l'art antérieur.

Lorsqu'ils sont montés sur la surface de pose 34, les mandrins 36, 36' sont parallèles entre eux et orientés selon une direction longitudinale (sensiblement parallèle aux premier et deuxième chants 40.1, 40.2). Une direction transversale est une direction perpendiculaire à la direction longitudinale.

Le dispositif de fabrication 32 comprend un ensemble de mandrins impairs 36 et pairs 36' posés alternativement sur la surface de pose 34, les uns à côté des autres, en commençant par un premier mandrin 36a et en finissant par un dernier mandrin décalé par rapport au premier mandrin 36a selon la direction transversale et un sens de montage matérialisé par la flèche F36.

Le dispositif de fabrication 32 comprend également un système de compression 46 configuré pour plaquer les mandrins 36, 36' les uns contre les autres selon une direction de compression parallèle à la direction transversale et dans un sens de compression (opposé au sens de montage F36). A titre d'exemple, le système de compression 46 est une poutre de compression identique à celles de l'art antérieur.

Selon une particularité de l'invention, le dispositif de fabrication 32 comprend un système de maintien temporaire des mandrins 36, 36' qui comporte, pour chaque mandrin 36, 36', au moins un pion d'indexage 48 solidaire du mandrin 36, 36', présentant au moins une partie 48.1 en saillie au moins temporairement par rapport à la surface de contact 38 du mandrin 36, 36' et situé entre ses première et deuxième extrémités 36.1, 36.2 ainsi qu'au moins un logement 50 solidaire au moins temporairement de la surface de pose 34 et configuré pour loger la partie 48.1 en saillie d'un pion d'indexage 48.

Selon une configuration, chaque pion d'indexage 48 est rétractable et configuré pour occuper un état rétracté dans lequel le pion d'indexage 48 n'est pas en saillie par rapport à la surface de contact 38 ainsi qu'un état sorti dans lequel le pion d'indexage 48 comprend une partie 48.1 en saillie par rapport à la surface de contact 38. Chaque pion d'indexage 48 étant rétractable, la surface de contact de chaque mandrin 36, 36' est en contact avec la surface de pose 34 même si le pion d'indexage 48 n'est pas positionné au droit d'un logement 50.

Selon un mode de réalisation, chaque mandrin 36, 36' comprend, pour chaque pion d'indexage 48, un élément de rappel 52 pour maintenir le pion d'indexage 48 à l'état sorti.

Selon un mode de réalisation, chaque mandrin 36, 36' comprend, pour chaque pion d'indexage 48, un trou borgne 54 configuré pour loger le pion d'indexage 48, ledit trou borgne 54 débouchant au niveau de la surface de contact 38 et présentant une paroi latérale cylindrique 54.1 ainsi qu'un fond 54.2 distant de la surface de contact 38. Selon une configuration, l'élément de rappel 52 est un ressort de compression intercalé entre le pion d'indexage 48 et le fond 54.2 du trou borgne 54.

En complément, le pion d'indexage 48 comprend un corps cylindrique 56 s'étendant entre des première et deuxième extrémités ainsi qu'une tête 58 cylindrique, solidaire de la deuxième extrémité du corps cylindrique 56, ayant un diamètre inférieur à celui de la paroi latérale cylindrique 54.1 du trou borgne 54, la tête 58 étant orientée vers le fond 54.2, l'élément de rappel 52 étant intercalé entre le fond 54.2 et la tête 58. Chaque mandrin 36, 36' comprend, pour chaque trou borgne 54, une bague coulissante 60 qui présente une surface cylindrique extérieure 60.1 ayant un diamètre sensiblement égal à celui de la paroi latérale cylindrique 54.1 du trou borgne 54 ainsi qu'une surface cylindrique intérieure 60.2, coaxiale à la surface cylindrique extérieure 60.1, ayant un diamètre sensiblement égal à celui du corps cylindrique 56 du pion d'indexage 48.

Selon une configuration, chaque mandrin 36, 36' comprend plusieurs pions d'indexage 48 répartis entre les première et deuxième extrémités 36.1, 36.2 du mandrin 36, 36'. Le nombre de pions d'indexage 48 est fonction de la longueur du mandrin 36, 36', ce dernier ayant une flexion quasi nulle dans un plan sensiblement parallèle à la surface de contact 38, entre deux pions d'indexage 48 ou entre un pion d'indexage 48 et la première ou deuxième extrémité 36.1, 36.2.

Le dispositif de fabrication 32 comprend plusieurs logements 50 situés au niveau de la surface de pose 34 et configurés pour loger chacun la partie 48.1 en saillie d'un pion d'indexage 48, notamment la première extrémité de son corps cylindrique 56. Les différents logements 50 sont positionnés afin de limiter la flexion des mandrins 36 36'.

Selon un mode de réalisation, le dispositif de fabrication 32 comprend au moins une règle 62 orientée selon une direction transversale et mobile selon la direction transversale, la règle 62 présentant une première face 62.1 orientée vers la surface de contact 38 des mandrins 36, 36' lorsque ces derniers sont posés sur la surface de pose 34, ladite première face 62.1 de la règle 62 présentant au moins un logement 50 configuré pour loger la partie 48.1 en saillie d'un pion d'indexage 48.

La surface de pose 34 comprend, pour chaque règle 62, une rainure 64 orientée selon une direction parallèle à la direction transversale, adaptée pour loger la règle 62 et lui permettre de coulisser selon la direction transversale. La rainure 64 et la règle 62 ont des sections sensiblement égales de sorte que la première face 62.1 de la règle 62 affleure à la surface de pose 34 (par affleurer, on entend que la première face 62.1 de la règle 62 est sensiblement coplanaire avec la surface de pose 34). Ainsi, la surface de contact 38 de chaque mandrin 36, 36' est en contact avec la surface de pose 34.

La rainure 64 s'étend entre des première et deuxième extrémités 64.1, 64.2, la première extrémité 64.1 étant proche du dernier mandrin posé lorsque l'ensemble des mandrins 36, 36' sont posés sur la surface de pose 34.

La rainure 64 présente une dimension selon la direction transversale supérieure à celle de la règle 62 pour lui permettre de coulisser dans la rainure 64 selon la direction transversale.

Le dispositif de fabrication 32 comprend, pour chaque règle 62, au moins un élément de verrouillage 66 configuré pour occuper un état monté dans lequel l'élément de verrouillage 66 est relié à la surface de pose 34 et maintient la règle 62 à l'état verrouillé ainsi qu'un état démonté dans lequel l'élément de verrouillage 66 est séparé de la surface de pose 34, l'état démonté correspondant à l'état déverrouillé de la règle 62.

Selon ce mode de réalisation, lorsque l'élément de verrouillage 66 est à l'état monté, la règle 62 ne peut pas se déplacer selon la direction transversale dans le sens de montage F36 et chaque mandrin 36, 36', qui présente un pion d'indexage 48 partiellement logé dans un logement 50 prévu au niveau de la règle 62, ne peut pas se déformer en flexion dans un plan parallèle à la surface de pose 34 selon le sens de montage F36.

Lorsque l'élément de verrouillage 66 est à l'état démonté, la règle 62 peut se translater selon la direction transversale dans les deux sens.

Selon une configuration, l'élément de verrouillage 66 est configuré pour immobiliser la règle 62 selon la direction transversale dans les deux sens à l'état monté.

Selon un mode de réalisation, la rainure 64 présente une dimension selon la direction transversale sensiblement égale à la somme des dimensions selon la direction transversale de la règle 62 et de l'élément de verrouillage 66. A l'état monté, l'élément de verrouillage 66 est positionné au niveau d'une extrémité de la rainure 64, notamment au niveau de sa première extrémité 64.1 de sorte à immobiliser en translation la règle 62 dans la rainure 64.

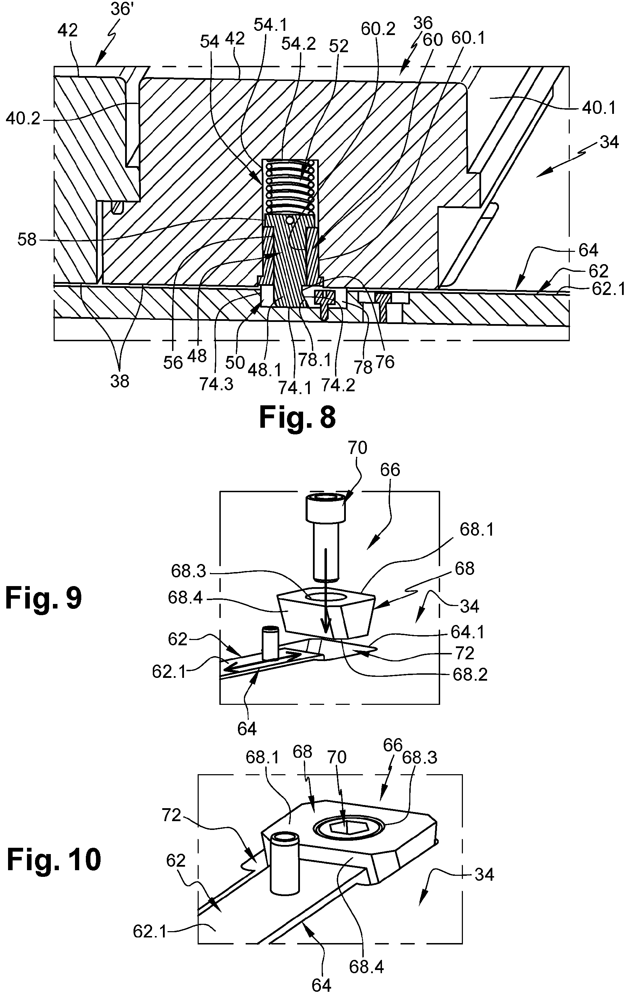

Selon un mode de réalisation visible sur les figures 9 et 10, l'élément de verrouillage 66 comprend un plot de verrouillage 68 ainsi qu'un élément de fixation 70 configuré pour relier de manière démontable le plot de verrouillage 68 et la surface de pose 34. Le plot de verrouillage 68 comprend des première et deuxième faces 68.1, 68.2 parallèles entre elles, la deuxième face 68.2 étant configurée pour être plaquée contre la surface de pose 34, ainsi qu'un trou traversant 68.3, qui débouche au niveau des première et deuxième faces 68.1, 68.2, configuré pour loger l'élément de fixation 70. A titre d'exemple, ce dernier est une vis configurée pour traverser le plot de verrouillage 68 via le trou traversant 68.3 et se visser dans un trou fileté prévu au niveau de la surface de pose 34.

Le plot de verrouillage 68 comprend un chant de contact 68.4, reliant les première et deuxième faces 68.1, 68.2, configuré pour prendre appui contre la règle 62. Selon un agencement, le chant de contact 68.4 est incliné de sorte que lorsque le plot de verrouillage 68 se rapproche de la surface de pose 34 lors du vissage de l'élément de fixation 70, le chant de contact 68.4 pousse la règle 62 en direction de la deuxième extrémité 64.2 de la rainure 64.

Selon un mode de réalisation, le plot de verrouillage 68 a une forme de pyramide tronquée, la petite base correspondant à la deuxième face 68.2 orientée vers la surface de pose 34. En complément, la rainure 64 comprend au niveau de sa première extrémité 64.1 une empreinte 72 configurée pour recevoir le plot de verrouillage 68. Cette empreinte 72 présente une forme complémentaire à celle du plot de verrouillage 68 de manière à favoriser le positionnement du plot de verrouillage 68 dans l'empreinte 72.

Bien entendu, l'invention n'est pas limitée à ce mode de réalisation pour l'élément de verrouillage 66. Quel que soit le mode de réalisation, chaque règle 62 est mobile selon une direction transversale par rapport à la surface de pose 34 et configurée pour occuper un état déverrouillé dans lequel la règle 62 peut se translater par rapport à la surface de pose 34 selon la direction transversale dans les deux sens et un état verrouillé dans lequel la règle 62 est bloquée par rapport à la surface de pose 34 et ne peut pas se translater selon la direction transversale au moins dans le sens de montage F36.

Comme illustré sur la figure 8, chaque logement 50 est délimité par un fond 74.1 sensiblement parallèle à la première face 62.1 de la règle 62, un premier chant 74.2, orienté vers la première extrémité 64.1 de la règle 62 et contre lequel prend appui un pion d'indexage 48, qui relie la première face 62.1 de la règle 62 et le fond 74.1 ainsi qu'un deuxième chant 74.3 orienté vers la deuxième extrémité 64.2 de la règle 62 et reliant la première face 62.1 de la règle 62 et le fond 74.1. Le deuxième chant 74.3 est sensiblement perpendiculaire au fond 74.1. Selon une particularité, le premier chant 74.2 est incliné de sorte que la distance entre les premier et deuxième chants 74.2, 74.3 augmente de la première face 62.1 de la règle 62 vers le fond 74.1. En complément, chaque pion d'indexage 48 comprend une encoche 76 configurée pour coopérer avec le premier chant 74.2 d'un logement 50, l'encoche 76 présentant un pan sensiblement parallèle au premier chant 74.2 du logement 50. Ainsi, l'encoche 76 et le premier chant 74.2 sont configurés pour maintenir le pion d'indexage 48 à l'état sorti lorsque la règle 62 est à l'état verrouillé.

Selon une configuration visible sur la figure 8, chaque règle 62 comprend, pour chaque logement 50, une cale 78 fixée contre le fond 74.1 du logement 50 et présentant un chant biseauté 78.1 qui forme le premier chant 74.2 incliné.

Selon une autre particularité, le dispositif de fabrication 32 comprend au moins un jeu de règles 82 comportant une première règle 62 configurée pour coopérer avec les pions d'indexage 48 des mandrins impairs 36 ainsi qu'une deuxième règle 62' configurée pour coopérer avec les pions d'indexage 48 des mandrins pairs 36'.

Selon un mode de réalisation, le dispositif de fabrication 32 comprend au moins un jeu de règles 82 comportant une première règle 62 configurée pour coopérer avec les pions d'indexage 48 des mandrins impairs 36, une deuxième règle 62' configurée pour coopérer avec les pions d'indexage 48 des mandrins pairs 36' ainsi qu'une troisième règle 62" configurée pour coopérer avec un pion d'indexage 48 du dernier mandrin 36, 36' posé sur la surface de pose 34.

Selon un agencement, les règles 62, 62', 62" d'un même jeu de règles 82 sont parallèles entre elles et faiblement espacées entre elles. A titre indicatif, elles sont espacées entre elles d'une distance inférieure à 15 cm.

Selon une configuration, le dispositif de fabrication 32 comprend plusieurs jeux de règles 82, 82', 82" répartis entre les première et deuxième extrémités 36.1, 36.2 des mandrins 36, 36'. Comme illustré sur la figure 5, le dispositif de fabrication 32 comprend des premier, deuxième et troisième jeux de règles 82, 82', 82", un premier jeu de règles 82 étant positionné sensiblement à équidistance des première et deuxième extrémités 36.1, 36.2 de chaque mandrin 36, 36', les deuxième et troisième jeux de règles 82', 82" étant situés respectivement à proximité des première et deuxième extrémités 36.1, 36.2 des mandrins 36, 36'.

Les mandrins impairs et pairs 36, 36' comprennent chacun autant de pions d'indexage que de jeux de règles 82, 82', 82". Selon le mode de réalisation visible sur la figure 5, chacun des mandrins impairs et pairs 36, 36' comprend trois pions d'indexage 48.

Pour tous les mandrins impairs 36, les pions d'indexage 48 sont répartis de la même manière entre les première et deuxième extrémités 36.1, 36.2. Ainsi, lorsque les mandrins impairs 36 sont posés sur la surface de pose 34, leurs pions d'indexage 48 sont alignés selon plusieurs droites sensiblement parallèles et orientées selon des directions transversales.

Selon le mode de réalisation visible sur la figure 5, chaque mandrin impair 36 comprend des premier, deuxième et troisième pions d'indexage 48 coopérant avec les premières règles 62 des jeux de règles 82, 82', 82".

Pour tous les mandrins pairs 36', les pions d'indexage 48 sont répartis de la même manière entre les première et deuxième extrémités 36.1, 36.2. Ainsi, lorsque les mandrins pairs 36' sont posés sur la surface de pose 34, leurs pions d'indexage 48 sont alignés selon plusieurs droites sensiblement parallèles et orientées selon des directions transversales.

Selon le mode de réalisation visible sur la figure 5, chaque mandrin pair 36' comprend des premier, deuxième et troisième pions d'indexage 48 coopérant avec les deuxièmes règles 62' des jeux de règles 82, 82', 82".

Le dernier mandrin comprend trois pions d'indexage 48 coopérant avec les troisièmes règles 62" des jeux de règles 82, 82', 82".

Les pions d'indexage 48 des mandrins impairs 36 sont décalés par rapport à ceux des mandrins pairs 36' de sorte que les pions d'indexage 48 des mandrins impairs 36 ne coopèrent pas avec la même règle que les pions d'indexage 48 des mandrins pairs 36'.

Le principe de fonctionnement du dispositif de fabrication est le suivant.

Les différentes règles 62, 62', 62" des différents jeux de règles 82, 82', 82" sont à l'état déverrouillé. Le premier mandrin 36a supportant un profilé est positionné sur la surface de pose 34 et ses première et deuxième extrémités 36.1, 36.2 sont reliées à la surface de pose 34 grâce aux premier et deuxième éléments de fixation 44.1, 44.2. Les pions d'indexage 48 du premier mandrin 36a sont logés dans les logements 50 des premières règles 62 des différents jeux de règles 82, 82', 82"qui sont verrouillées et immobilisées en translation.

Les deuxièmes règles 62' des différents jeux de règles 82, 82', 82" étant toujours à l'état déverrouillé, un deuxième mandrin 36' supportant un profilé est positionné sur la surface de pose 34 et ses première et deuxième extrémités 36.1, 36.2 sont reliées à la surface de pose 34. Les pions d'indexage 48 du deuxième mandrin 36' sont logés dans les logements 50 des deuxièmes règles 62' des différents jeux de règles 82, 82', 82". Le système de compression 46 est utilisé pour plaquer le deuxième mandrin 36' contre le premier mandrin 36a. Lorsque le deuxième mandrin 36' est maintenu plaqué contre le premier mandrin 36a par le système de compression 46, les deuxièmes règles 62' des différents jeux de règles 82, 82', 82" sont verrouillées. Le système de compression 46 est alors retiré. Les premières règles 62 des différents jeux de règles 82, 82', 82" sont alors déverrouillées.

Lors de la mise en place de chaque mandrin impair 36 supportant un profilé, les premières règles 62 des différents jeux de règles 82, 82', 82" sont à l'état déverrouillé. Le mandrin impair 36 est posé sur la surface de pose 34 et ses première et deuxième extrémités 36.1, 36.2 sont reliées à la surface de pose 34. Les pions d'indexage 48 du mandrin impair 36 sont logés dans les logements 50 des premières règles 62 des différents jeux de règles 82, 82', 82" qui sont à l'état déverrouillé. Le système de compression 46 est utilisé pour plaquer le mandrin impair 36 contre le dernier mandrin pair 36' posé. Lorsque le mandrin impair 36 est maintenu plaqué contre le dernier mandrin pair 36' posé par le système de compression 46, les premières règles 62 des différents jeux de règles 82, 82', 82" sont verrouillées. Le système de compression 46 est alors retiré. Les deuxièmes règles 62' des différents jeux de règles 82, 82', 82" sont alors déverrouillées.

Lors de la mise en place de chaque mandrin pair 36' supportant un profilé, les deuxièmes règles 62' des différents jeux de règles 82, 82', 82" sont à l'état déverrouillé. Le mandrin pair 36' est posé sur la surface de pose 34 et ses première et deuxième extrémités 36.1, 36.2 sont reliées à la surface de pose 34. Les pions d'indexage 48 du mandrin pair 36' sont logés dans les logements 50 des deuxièmes règles 62' des différents jeux de règles 82, 82', 82" qui sont à l'état déverrouillé. Le système de compression 46 est utilisé pour plaquer le mandrin pair 36' contre le dernier mandrin impair 36 posé. Lorsque le mandrin pair 36' est maintenu plaqué contre le dernier mandrin impair 36 posé par le système de compression 46, les deuxièmes règles 62' des différents jeux de règles 82, 82', 82" sont verrouillées. Le système de compression 46 est alors retiré. Les premières règles 62 des différents jeux de règles 82, 82', 82" sont alors déverrouillées.

Lors de la mise en place du dernier mandrin 36, 36', les première ou deuxième règles 62, 62' des différents jeux de règles 82, 82', 82" coopérant avec les pions d'indexage 48 du mandrin 36, 36' précédemment posé sont à l'état verrouillé. Les troisièmes règles 62" des différents jeux de règles 82, 82', 82" sont à l'état déverrouillé. Le dernier mandrin 36, 36' est posé sur la surface de pose 34 et ses première et deuxième extrémités 36.1, 36.2 sont reliées à la surface de pose 34. Le système de compression 46 est utilisé pour plaquer le dernier mandrin 36, 36' contre le mandrin 36, 36' précédemment posé. Lorsque le dernier mandrin 36, 36' est maintenu plaqué contre le mandrin 36, 36' précédemment posé par le système de compression 46, les troisièmes règles 62" des différents jeux de règles 82, 82', 82" sont verrouillées. Le système de compression 46 est alors retiré. Les premières et deuxièmes règles 62, 62' des différents jeux de règles 82, 82', 82" sont alors déverrouillées.

Lors d'une étape de polymérisation ou de consolidation, les différentes règles 62, 62', 62" des différents jeux de règles 82, 82', 82" sont déverrouillées.

Le procédé de fabrication d'un panneau raidi en matériau composite utilisant le dispositif de fabrication précédemment décrit comprend :
- une étape de pose d'un mandrin impair ou pair 36, 36' supportant un profilé en matériau composite cru ou mi-cuit sur la surface de pose 34 contre un mandrin impair ou pair 36, 36' précédemment posé supportant un profilé en matériau composite cru ou mi-cuit,
- une étape de fixation des première et deuxième extrémités 36.1, 36.2 du mandrin impair ou pair 36, 36' juste posé sur la surface de pose 34,
- une étape de compression, grâce à un système de compression 46, du mandrin impair ou pair 36, 36' juste posé contre le mandrin impair ou pair 36, 36' précédemment posé,
- après que chaque pion d'indexage 48 relié audit mandrin impair ou pair juste posé ait été logé dans un logement 50 d'une règle 62, 62', 62" à l'état verrouillé, une étape de retrait du système de compression 46,
- les étapes précédentes étant répétées jusqu'à ce que tous les mandrins impairs et pairs 36, 36' soient posés sur la surface de pose 34,
- une étape de consolidation ou de polymérisation lors de laquelle les règles 62, 62', 62" sont à l'état déverrouillé.

Selon un mode opératoire, chaque première règle 62 de chaque jeu de règles 82, 82', 82" est verrouillée à l'issue de l'étape de compression d'un mandrin impair 36 avant que le système de compression 46 ne soit retiré. De la même manière, chaque deuxième règle 62' de chaque jeu de règles 82, 82', 82" est verrouillée à l'issue de l'étape de compression d'un mandrin pair 36' avant que le système de compression 46 ne soit retiré.

Contrairement à l'art antérieur, après le retrait du système de compression 46, le mandrin impair ou pair 36, 36' juste plaqué ne se déforme pas car il est maintenu par au moins un pion d'indexage 48 qui coopère avec un logement 50 d'une règle 62, 62', 62" à l'état verrouillé et immobile par rapport à la surface de pose 34.

## Revendications

1. Dispositif de fabrication d'un panneau raidi en matériau composite comprenant une surface de pose (34) ainsi qu'un ensemble de mandrins impairs et pairs (36, 36') accolés les uns aux autres, orientés selon une direction longitudinale et montés les uns après les autres selon un sens de montage (F36), chaque mandrin impair ou pair (36, 36') présentant des première et deuxième extrémités (36.1, 36.2), une surface de contact (38) configurée pour être plaquée contre la surface de pose (34) ainsi qu'au moins une surface de moulage configurée pour recevoir au moins un profilé en matériau composite, le dispositif de fabrication comportant un système de compression (46) configuré pour plaquer les mandrins impairs et pairs (36, 36') les uns contre les autres ainsi que des premier et deuxième éléments de fixation (44.1, 44.2) configurés pour relier respectivement les première et deuxième extrémités (36.1, 36.2) de chaque mandrin impair ou pair (36, 36') à la surface de pose (34) ; **caractérisé en ce que** le dispositif de fabrication (32) comprend un système de maintien temporaire des mandrins impairs et pairs (36, 36') qui comporte au moins un logement (50) solidaire au moins temporairement de la surface de pose (34) ainsi que, pour chaque mandrin impair ou pair (36, 36'), au moins un pion d'indexage (48) solidaire du mandrin impair ou pair (36, 36') et situé entre ses première et deuxième extrémités (36.1, 36.2), ledit pion d'indexage (48) présentant au moins une partie (48.1) en saillie au moins temporairement par rapport à la surface de contact (38) du mandrin impair ou pair (36, 36') et configurée pour se loger dans le logement (50).

2. Dispositif de fabrication selon la revendication 1, **caractérisé en ce que** chaque pion d'indexage (48) est rétractable et configuré pour occuper un état rétracté dans lequel la partie (48.1) du pion d'indexage (48) n'est pas en saillie par rapport à la surface de contact (38) et un état sorti dans lequel la partie (48) du pion d'indexage (48) est en saillie par rapport à la surface de contact (38).

3. Dispositif de fabrication selon la revendication précédente, **caractérisé en ce que** chaque mandrin impair ou pair (36, 36') comprend, pour chaque pion d'indexage (48), un élément de rappel (52) pour maintenir le pion d'indexage (48) à l'état sorti.

4. Dispositif de fabrication selon l'une des revendications précédentes, **caractérisé en ce que** le dispositif de fabrication comprend au moins une règle (62) présentant au moins un logement (50) configuré pour loger la partie (48.1) en saillie d'un pion d'indexage (48), chaque règle (62) étant mobile selon une direction transversale perpendiculaire à la direction longitudinale par rapport à la surface de pose (34) et configurée pour occuper un état déverrouillé dans lequel la règle (62) peut se translater selon la direction transversale ainsi qu'un état verrouillé dans lequel la règle (62) est bloquée au moins dans le sens de montage (F36).

5. Dispositif de fabrication selon la revendication précédente, **caractérisé en ce que** chaque logement (50) comprend un premier chant (74.2) configuré pour coopérer avec un pion d'indexage (48) et **en ce que** chaque pion d'indexage (48) comprend une encoche (76) configurée pour coopérer avec le premier chant (74.2) d'un logement (50), l'encoche (76) et le premier chant (74.2) étant configurés pour maintenir le pion d'indexage (48) à l'état sorti lorsque la règle (62) est à l'état verrouillé.

6. Dispositif de fabrication selon l'une des revendications 4 à 5, **caractérisé en ce que** la surface de pose (34) comprend, pour chaque règle (62), une rainure (64) orientée selon une direction parallèle à la direction transversale, adaptée pour loger la règle (62) et lui permettre de coulisser selon la direction transversale.

7. Dispositif de fabrication selon la revendication précédente, **caractérisé en ce que** la rainure (64) et la règle (62) ont des sections sensiblement égales de sorte que la première face (62.1) de la règle (62) affleure à la surface de pose (34).

8. Dispositif de fabrication selon l'une des revendications 6 à 7, **caractérisé en ce que** le dispositif de fabrication (32) comprend, pour chaque règle (62), au moins un élément de verrouillage (66) configuré pour occuper un état monté dans lequel l'élément de verrouillage (66) est relié à la surface de pose (34) et maintient la règle (62) à l'état verrouillé ainsi qu'un état démonté dans lequel l'élément de verrouillage (66) est séparé de la surface de pose (34), l'état démonté correspondant à l'état déverrouillé de la règle (62).

9. Dispositif de fabrication selon la revendication précédente, **caractérisé en ce qu'**à l'état monté, l'élément de verrouillage (66) est positionné au niveau d'une extrémité de la rainure (64), la rainure (64) présentant une dimension selon la direction transversale sensiblement égale à la somme des dimensions selon la direction transversale de la règle (62) et de l'élément de verrouillage (66).

10. Dispositif de fabrication selon la revendication précédente, **caractérisé en ce que** l'élément de verrouillage (66) comprend un plot de verrouillage (68) ainsi qu'un élément de fixation (70) configuré pour relier de manière démontable le plot de verrouillage (68) et la surface de pose (34), le plot de verrouillage (68) comportant un chant de contact (68.4) configuré pour prendre appui contre la règle (62), ledit chant de contact (68.4) étant incliné de sorte que lorsque le plot de verrouillage (68) se rapproche de la surface de pose (34), le plot de verrouillage (68) pousse la règle (62).

11. Dispositif de fabrication selon la revendication précédente, **caractérisé en ce que** le plot de verrouillage (68) a une forme de pyramide tronquée et **en ce que** la rainure (64) comprend une empreinte (72) configurée pour recevoir le plot de verrouillage (68), l'empreinte (72) présentant une forme complémentaire à celle du plot de verrouillage (68).

12. Dispositif de fabrication selon l'une des revendications précédentes, **caractérisé en ce que** le dispositif de fabrication (32) comprend au moins un jeu de règles (82) comportant une première règle (62) configurée pour coopérer avec les pions d'indexage (48) des mandrins impairs (36) ainsi qu'une deuxième règle (62') configurée pour coopérer avec les pions d'indexage (48) des mandrins pairs (36').

13. Dispositif de fabrication selon la revendication précédente, **caractérisé en ce que** chaque jeu de règles (82) comprend une troisième règle (62") configurée pour coopérer avec un pion d'indexage (48) du dernier mandrin (36, 36') posé sur la surface de pose (34).

14. Dispositif de fabrication selon l'une des revendications 12 à 13, **caractérisé en ce que** le dispositif de fabrication (32) comprend plusieurs jeux de règles (82, 82', 82") répartis entre les première et deuxième extrémités (36.1, 36.2) des mandrins (36, 36').

15. Procédé de fabrication d'un panneau raidi en matériau composite utilisant un dispositif de fabrication selon l'une des revendications précédentes, de sorte que le procédé de fabrication comprend :
- une étape de pose sur la surface de pose (34) d'un mandrin impair ou pair (36, 36') supportant un profilé en matériau composite cru ou mi-cuit,
- une étape de fixation des première et deuxième extrémités (36.1, 36.2) du mandrin impair ou pair (36, 36') juste posé sur la surface de pose (34),
- une étape de compression du mandrin impair ou pair (36, 36') juste posé contre un mandrin impair ou pair (36, 36') précédemment posé grâce à un système de compression (46),
- après que chaque pion d'indexage (48) relié audit mandrin impair ou pair juste posé (36, 36') ait été logé dans un logement (50) d'une règle (62, 62', 62") à l'état verrouillé, une étape de retrait du système de compression (46),
- les étapes précédentes étant répétées jusqu'à ce que tous les mandrins impairs et pairs (36, 36') soient posés sur la surface de pose (34),
- une étape de consolidation ou de polymérisation lors de laquelle les règles (62, 62', 62") sont à l'état déverrouillé.

16. Procédé de fabrication selon la revendication précédente, **caractérisé en ce que** chaque mandrin impair (36) coopère avec la première règle (62) de chaque jeu de règles (82, 82, 82"), **en ce que** chaque mandrin pair (36') coopère avec la deuxième règle (62') de chaque jeu de règles (82, 82', 82"), **en ce que** chaque première règle (62) de chaque jeu de règles (82, 82', 82") est verrouillée à l'issue de l'étape de compression d'un mandrin impair (36) avant que le système de compression (46) ne soit retiré et **en ce que** chaque deuxième règle (62') de chaque jeu de règles (82, 82', 82") est verrouillée à l'issue de l'étape de compression d'un mandrin pair (36') avant que le système de compression (46) ne soit retiré.

## Patentansprüche

1. Herstellungsvorrichtung einer versteiften Platte aus Verbundmaterial, die eine Auflagefläche (34) aufweist sowie eine Anordnung von ungeraden und geraden Haltern (36, 36'), die aneinander anliegen, in Längsrichtung ausgerichtet sind und nacheinander in einer Einbaurichtung (F36) montiert sind, wobei jeder ungerade oder gerade Halter (36, 36') ein erstes und ein zweites Ende (36.1, 36.2) aufweist, eine Kontaktfläche (38), die dazu eingerichtet ist, an die Verlegefläche (34) angesetzt zu werden, sowie wenigstens eine Formfläche, die dazu eingerichtet ist, wenigstens ein Profil aus Verbundmaterial aufzunehmen, wobei die Herstellungsvorrichtung ein Zusammendrücksystem (46) aufweist, das dazu eingerichtet ist, die ungeraden und geraden Halter (36, 36') gegeneinander zu pressen, sowie erste und zweite Befestigungselemente (44.1, 44.2), die dazu eingerichtet sind, jeweils das erste und zweite Ende (36.1, 36.2) jedes ungeraden oder geraden Halters (36, 36') mit der Auflagefläche (34) zu verbinden, **dadurch gekennzeichnet, dass** die Herstellungsvorrichtung (32) ein System zum vorübergehenden Halten der ungeraden und geraden Halter (36, 36') aufweist, das wenigstens eine Aufnahme (50) umfasst, die zumindest vorübergehend fest mit der Auflagefläche (34) verbunden ist, sowie für jeden ungeraden oder geraden Halter (36, 36') wenigstens einen Indexierstift (48) umfasst, der fest mit dem ungeraden oder geraden Halter (36, 36') verbunden ist und sich zwischen dessen erstem und zweitem Ende (36.1, 36.2) befindet, wobei der Indexierstift (48) wenigstens einen Abschnitt (48.1) aufweist, der wenigstens vorübergehend gegenüber der Kontaktfläche (38) des ungeraden oder geraden Halters (36, 36') vorsteht und dazu eingerichtet ist, in der Aufnahme (50) aufgenommen zu sein.

2. Herstellungsvorrichtung nach Anspruch 1, **dadurch gekennzeichnet, dass** jeder Indexierstift (48) einziehbar und dazu eingerichtet ist, einen eingezogenen Zustand einzunehmen, in dem der Abschnitt (48.1) des Indexierstifts (48) nicht über die Kontaktfläche (38) hinausragt, und einen ausgefahrenen Zustand einzunehmen, in dem der Abschnitt (48) des Indexierstifts (48) über die Kontaktfläche (38) hinausragt.

3. Herstellungsvorrichtung nach dem vorstehenden Anspruch, **dadurch gekennzeichnet, dass** jeder ungerade oder gerade Halter (36, 36') für jeden Indexierstift (48) ein Rückstellelement (52) aufweist, um den Indexierstift (48) im ausgefahrenen Zustand zu halten.

4. Herstellungsvorrichtung nach einem der vorstehenden Ansprüche, **dadurch gekennzeichnet, dass** die Herstellungsvorrichtung wenigstens eine Leiste (62) aufweist, die wenigstens eine Aufnahme (50) aufweist, die dazu eingerichtet ist, den vorstehenden Abschnitt (48.1) eines Indexierstifts (48) aufzunehmen, wobei jede Leiste (62) in einer rechtwinkligen Querrichtung zu der Längsrichtung relativ zur Auflagefläche (34) beweglich ist und dazu eingerichtet ist, einen entriegelten Zustand, in dem die Leiste (62) in der Querrichtung verschiebbar ist, sowie einen verriegelten Zustand einzunehmen, in dem die Leiste (62) wenigstens in der Einbaurichtung (F36) blockiert ist.

5. Herstellungsvorrichtung nach dem vorstehenden Anspruch, **dadurch gekennzeichnet, dass** jede Aufnahme (50) eine erste Kante (74.2) aufweist, die dazu eingerichtet ist, mit einem Indexierstift (48) zusammenzuwirken, und dass jeder Indexierstift (48) eine Kerbe (76) aufweist, die dazu eingerichtet ist, mit der ersten Kante (74.2) einer Aufnahme (50) zusammenzuwirken, wobei die Kerbe (76) und die erste Kante (74.2) dazu eingerichtet sind, den Indexstift (48) im ausgefahrenen Zustand zu halten, wenn sich die Leiste (62) im verriegelten Zustand befindet.

6. Herstellungsvorrichtung nach einem der Ansprüche 4 bis 5, **dadurch gekennzeichnet, dass** die Auflagefläche (34) für jede Leiste (62) eine in einer zur Querrichtung parallelen Richtung ausgerichtete Nut (64) aufweist, die dazu ausgelegt ist, die Leiste (62) aufzunehmen und sie in Querrichtung gleiten zu lassen.

7. Herstellungsvorrichtung nach dem vorstehenden Anspruch, **dadurch gekennzeichnet, dass** die Nut (64) und die Leiste (62) im Wesentlichen gleiche Querschnitte aufweisen, sodass die erste Seite (62.1) der Leiste (62) bündig mit der Auflagefläche (34) abschließt.

8. Herstellungsvorrichtung nach einem der Ansprüche 6 bis 7, **dadurch gekennzeichnet, dass** die Herstellungsvorrichtung (32) für jede Leiste (62) wenigstens ein Verriegelungselement (66) aufweist, das dazu eingerichtet ist, einen montierten Zustand einzunehmen, in dem das Verriegelungselement (66) mit der Auflagefläche (34) verbunden ist und die Leiste (62) im verriegelten Zustand hält, sowie einen demontierten Zustand, in dem das Verriegelungselement (66) von der Auflagefläche (34) getrennt ist, wobei der demontierte Zustand dem entriegelten Zustand der Leiste (62) entspricht.

9. Herstellungsvorrichtung nach dem vorstehenden Anspruch, **dadurch gekennzeichnet, dass** im montierten Zustand das Verriegelungselement (66) im Bereich des Endes der Nut (64) angeordnet ist, wobei die Nut (64) eine Abmessung in Querrichtung aufweist, die im Wesentlichen gleich der Summe der Abmessungen in Querrichtung der Leiste (62) und des Verriegelungselements (66) ist.

10. Herstellungsvorrichtung nach dem vorstehenden Anspruch, **dadurch gekennzeichnet, dass** das Verriegelungselement (66) einen Verriegelungsstopfen (68) sowie ein Befestigungselement (70) aufweist, das dazu eingerichtet ist, den Verriegelungsstopfen (68) und die Auflagefläche (34) lösbar miteinander zu verbinden, wobei der Verriegelungsstopfen (68) eine Kontaktseite (68.4) aufweist, die dazu eingerichtet ist, die Leiste (62) zu stützen, wobei die Kontaktseite (68.4) derart geneigt ist, dass der Verriegelungsstopfen (68) auf die Leiste (62) drückt, wenn sich der Verriegelungsstopfen (68) der Auflagefläche (34) nähert.

11. Herstellungsvorrichtung nach dem vorstehenden Anspruch, **dadurch gekennzeichnet, dass** der Verriegelungsstopfen (68) die Form einer Pyramidenstumpfs aufweist und dass die Nut (64) eine Vertiefung (72) aufweist, die dazu eingerichtet ist, den Verriegelungsstopfen (68) aufzunehmen, wobei die Vertiefung (72) eine zur Form des Verriegelungsstopfens (68) komplementäre Form aufweist.

12. Herstellungsvorrichtung nach einem der vorstehenden Ansprüche, **dadurch gekennzeichnet, dass** die Herstellungsvorrichtung (32) wenigstens einen Leistensatz (82) aufweist, der eine erste Leiste (62) umfasst, die dazu eingerichtet ist, mit den Indexierstiften (48) der ungeraden Halter (36) zusammenzuwirken, sowie eine zweite Leiste (62'), die dazu eingerichtet, mit den Indexierstiften (48) der geraden Halter (36') zusammenzuwirken.

13. Herstellungsvorrichtung nach dem vorstehenden Anspruch, **dadurch gekennzeichnet, dass** jeder Leistensatz (82) eine dritte Leiste (62") aufweist, die dazu eingerichtet ist, mit einem Indexierungsstift (48) des letzten auf der Auflagefläche (34) aufgesetzten Halters (36, 36') zusammenzuwirken.

14. Herstellungsvorrichtung nach einem der Ansprüche 12 bis 13, **dadurch gekennzeichnet, dass** die Herstellungsvorrichtung (32) mehrere Leistensätze (82, 82', 82") aufweist, die zwischen dem ersten und dem zweiten Ende (36.1, 36.2) der Halter (36, 36') verteilt sind.

15. Herstellungsverfahren zur Herstellung einer versteiften Platte aus Verbundmaterial unter Verwendung einer Herstellungsvorrichtung gemäß einem der vorstehenden Ansprüche, wobei das Herstellungsverfahren aufweist:
- einen Schritt des Auflegens eines ungeraden oder geraden Halters (36, 36'), der ein rohes oder halbausgehärtetes Verbundmaterialprofil trägt, auf die Auflagefläche (34),
- einen Schritt zum Befestigen des ersten und zweiten Endes (36.1, 36.2) des soeben auf die Auflagefläche (34) aufgelegten ungeraden oder geraden Halters (36, 36'),
- einen Schritt des Zusammendrückens des soeben aufgelegten ungeraden oder geraden Halters (36, 36') gegen einen zuvor aufgelegten ungeraden oder geraden Halter (36, 36') mittels eines Zusammendrücksystems (46),
- nachdem jeder Indexierstift (48), der mit den soeben aufgelegten ungeraden oder geraden Haltern (36, 36') verbundenen ist, in einer Aufnahme (50) einer Leiste (62, 62', 62") im verriegelten Zustand aufgenommen wurde, einen Schritt zum Entfernen des Zusammendrücksystems (46),
- wobei die vorangegangenen Schritte wiederholt werden, bis alle ungeraden und geraden Halter (36, 36') auf der Auflagefläche (34) angebracht sind,
- ein Verfestigungs- oder Polymerisationsschritt, bei dem sich die Leisten (62, 62', 62") im entriegelten Zustand befinden.

16. Herstellungsverfahren nach dem vorstehenden Anspruch, **dadurch gekennzeichnet, dass** jeder ungerade Halter (36) mit der ersten Leiste (62) jedes Leistensatzes (82, 82, 82") zusammenwirkt und dass jeder gerade Halter (36') mit der zweiten Leiste (62') jedes Leistensatzes (82, 82', 82") zusammenwirkt, dass jede erste Leiste (62) jedes Leistensatzes (82, 82', 82") nach Abschluss des Schrittes des Zusammendrückens eines ungeraden Halters (36) verriegelt wird, bevor das Zusammendrücksystem (46) entfernt wird, und dass jede zweite Leiste (62') jedes Leistensatzes (82, 82', 82") nach Abschluss des Schrittes des Zusammendrückens eines geraden Halters (36') verriegelt wird, bevor das Zusammendrücksystem (46) entfernt wird.

## Claims

1. Device for manufacturing a stiffened panel of composite material comprising a laying surface (34) and a set of odd and even mandrels (36, 36') attached to one another, oriented in a longitudinal direction and mounted one after the other in a direction of assembly (F36), each odd or even mandrel (36, 36') having first and second ends (36.1, 36.2), a contact surface (38) configured to be pressed against the laying surface (34), and at least one moulding surface configured to receive at least one profile of composite material, the manufacturing device comprising a compression system (46) configured to press the odd and even mandrels (36, 36') against one another, and first and second fasteners (44.1, 44.2) configured to connect the first and second ends (36.1, 36.2), respectively, of each odd or even mandrel (36, 36') to the laying surface (34); **characterized in that** the manufacturing device (32) comprises a system for temporarily holding the odd and even mandrels (36, 36'), which comprises at least one housing (50) secured at least temporarily to the laying surface (34), and, for each odd or even mandrel (36, 36'), at least one indexing pin (48) secured to the odd or even mandrel (36, 36') and located between its first and second ends (36.1, 36.2), said indexing pin (48) having at least one part (48.1) projecting at least temporarily from the contact surface (38) of the odd or even mandrel (36, 36') and configured to be received in the housing (50).

2. Manufacturing device according to Claim 1, **characterized in that** each indexing pin (48) is retractable and configured to occupy a retracted state, in which the part (48.1) of the indexing pin (48) does not project from the contact surface (38), and an extended state, in which the part (48) of the indexing pin (48) projects from the contact surface (38).

3. Manufacturing device according to the preceding claim, **characterized in that** each odd or even mandrel (36, 36') comprises, for each indexing pin (48), a return element (52) for maintaining the indexing pin (48) in the extended state.

4. Manufacturing device according to any one of the preceding claims, **characterized in that** the manufacturing device comprises at least one rule (62) having at least one housing (50) configured to house the projecting part (48.1) of an indexing pin (48), each rule (62) being movable in a transverse direction perpendicular to the longitudinal direction relative to the laying surface (34) and configured to occupy an unlocked state, in which the rule (62) is able to move in translation in the transverse direction, and a locked state, in which the rule (62) is blocked at least in the direction of assembly (F36).

5. Manufacturing device according to the preceding claim, **characterized in that** each housing (50) comprises a first edge (74.2) configured to cooperate with an indexing pin (48), and **in that** each indexing pin (48) comprises a notch (76) configured to cooperate with the first edge (74.2) of a housing (50), the notch (76) and the first edge (74.2) being configured to maintain the indexing pin (48) in the extended state when the rule (62) is in the locked state.

6. Manufacturing device according to either of Claims 4 and 5, **characterized in that** the laying surface (34) comprises, for each rule (62), a groove (64) oriented in a direction parallel to the transverse direction and adapted to house the rule (62) and to allow the latter to slide in the transverse direction.

7. Manufacturing device according to the preceding claim, **characterized in that** the groove (64) and the rule (62) have substantially equal cross sections, so that the first face (62.1) of the rule (62) is flush with the laying surface (34).

8. Manufacturing device according to either of Claims 6 and 7, **characterized in that** the manufacturing device (32) comprises, for each rule (62), at least one locking element (66) configured to occupy an assembled state, in which the locking element (66) is connected to the laying surface (34) and maintains the rule (62) in the locked state, and a disassembled state, in which the locking element (66) is separated from the laying surface (34), the disassembled state corresponding to the unlocked state of the rule (62).

9. Manufacturing device according to the preceding claim, **characterized in that**, in the assembled state, the locking element (66) is positioned at one end of the groove (64), the groove (64) having a dimension in the transverse direction substantially equal to the sum of the dimensions in the transverse direction of the rule (62) and of the locking element (66).

10. Manufacturing device according to the preceding claim, **characterized in that** the locking element (66) comprises a locking stud (68) and a fastener (70) which is configured to releasably connect the locking stud (68) and the laying surface (34), the locking stud (68) comprising a contact edge (68.4) configured to bear against the rule (62), said contact edge (68.4) being inclined such that, when the locking stud (68) approaches the laying surface (34), the locking stud (68) pushes the rule (62).

11. Manufacturing device according to the preceding claim, **characterized in that** the locking stud (68) has the shape of a truncated pyramid, and **in that** the groove (64) comprises a recess (72) configured to receive the locking stud (68), the recess (72) having a shape complementary to that of the locking stud (68).

12. Manufacturing device according to any one of the preceding claims, **characterized in that** the manufacturing device (32) comprises at least one rules set (82) comprising a first rule (62) configured to cooperate with the indexing pins (48) of the odd mandrels (36) and a second rule (62') configured to cooperate with the indexing pins (48) of the even mandrels (36').

13. Manufacturing device according to the preceding claim, **characterized in that** each rules set (82) comprises a third rule (62'') configured to cooperate with an indexing pin (48) of the last mandrel (36, 36') laid on the laying surface (34).

14. Manufacturing device according to either of Claims 12 and 13, **characterized in that** the manufacturing device (32) comprises a plurality of rules sets (82, 82', 82") distributed between the first and second ends (36.1, 36.2) of the mandrels (36, 36').

15. Method of manufacturing a stiffened panel of composite material using a manufacturing device according to any one of the preceding claims, such that the manufacturing method comprises:
- a step of laying, on the laying surface (34), an odd or even mandrel (36, 36') supporting a profile made of raw or semi-fired composite material,
- a step of fastening the first and second ends (36.1, 36.2) of the odd or even mandrel (36, 36') just laid on the laying surface (34),
- a step in which the odd or even mandrel (36, 36') just laid is compressed by a compression system (46) against an odd or even mandrel (36, 36') previously laid,
- after each indexing pin (48) connected to said odd or even mandrel just laid (36, 36') has been housed in a housing (50) of a rule (62, 62', 62") in the locked state, a step of withdrawing the compression system (46),
- the preceding steps being repeated until all the odd and even mandrels (36, 36') are laid on the laying surface (34),
- a consolidation or polymerization step during which the rules (62, 62', 62") are in the unlocked state.

16. Manufacturing method according to the preceding claim, **characterized in that** each odd mandrel (36) cooperates with the first rule (62) of each rules set (82, 82, 82"), **in that** each even mandrel (36') cooperates with the second rule (62') of each rules set (82, 82', 82''), **in that** each first rule (62) of each rules set (82, 82', 82") is locked at the end of the step of compression of an odd mandrel (36) before the compression system (46) is withdrawn, and **in that** each second rule (62') of each rules set (82, 82', 82'') is locked at the end of the step of compression of an even mandrel (36') before the compression system (46) is withdrawn.
